# EUROPEAN PATENT APPLICATION

(11) **EP 2 208 887 A2**
(43) Date of publication of application: **21.07.2010**
(21) Application number: 10150696.2
(22) Date of filing: 13.01.2010
(51) Int. Cl.: F03D 7/04, F03D 9/02

(54) **Wind generator**

(30) Priority: 14.01.2009 TW 098200609
(71) Applicant: Sunyen Co., Ltd., Hsinchu County 302 (TW)
(72) Inventor: Tu, Yu-Ta, Jhubei City (TW)
(74) Representative: Chaillot, Geneviève

(57) **Abstract**

The wind generator includes a propeller (20) , a speed sensor, a processor, at least two generators and a distributor. When the speed sensor detects that a wind speed or rotation-speed of a generator exceeds a threshold, the other generator 5joins to be in cooperation with it for reducing rotation-speed of the generators and increasing wind generation. Similarly, additional generators join to be in cooperation if rotation-speed of the propeller is still overhigh. No more generators join to cooperate if the rotation-speed is under the threshold.

## Description

### Background of the Invention

### 1. Technical Field

The invention generally relates to electric power, particularly to wind power generation.

### 2. Related Art

Wind generator converts wind power into electric power through wind turbine or propeller. The performance of wind generation primarily depends upon wind speed and blades of the propeller. The blades of propeller are rotated by wind to drive generator.

For the sake of safety, wind generators must rotate below a rated wind speed. When wind speed exceeds the rated value, wind generators must be braked to avoid damage caused by overspeed. However, wind energy is directly proportional to wind speed to the power of three. Braking the wind generator to strong winds is a waste of energy.

### Summary of the Invention

An object of the invention is to sufficiently exploit wind power. The invention can make rotation speed of generators must not be forcedly reduced because of too strong wind.

To accomplish the above object, the wind generator of the invention includes a propeller, a speed sensor, a processor, at least two generators and a distributor. When the speed sensor detects that a wind speed or rotation-speed of a generator exceeds a threshold, the other generator joins to be in cooperation with it for reducing rotation-speed of the generators and increasing wind generation. Similarly, additional generators will join to be in cooperation if rotation-speed of the propeller is still overhigh. No more generators will join to cooperate until the rotation-speed is under the threshold.

### Brief Description of the Drawings

FIG. 1 is a perspective view of the wind generator of the invention;
FIG. 2 is a cross-sectional view along the line A-A in FIG. 1; and
FIG. 3 is a block diagram of the invention.

### Detailed Description of the Invention

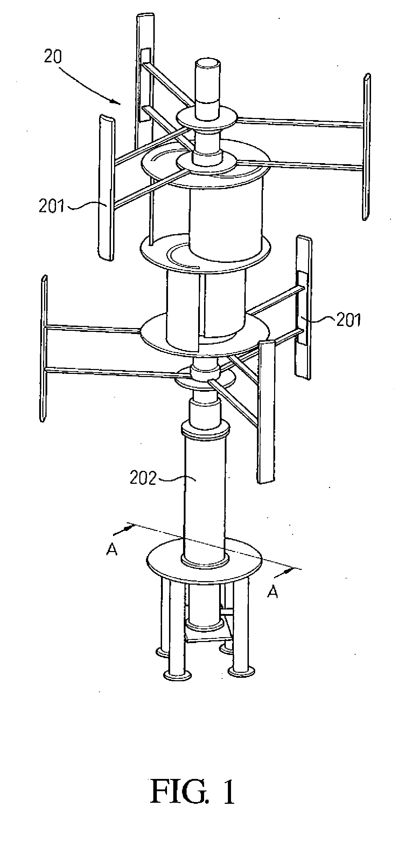

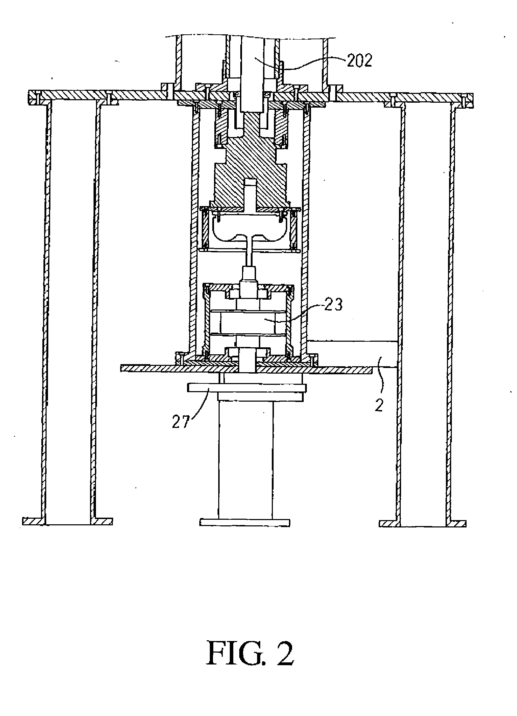

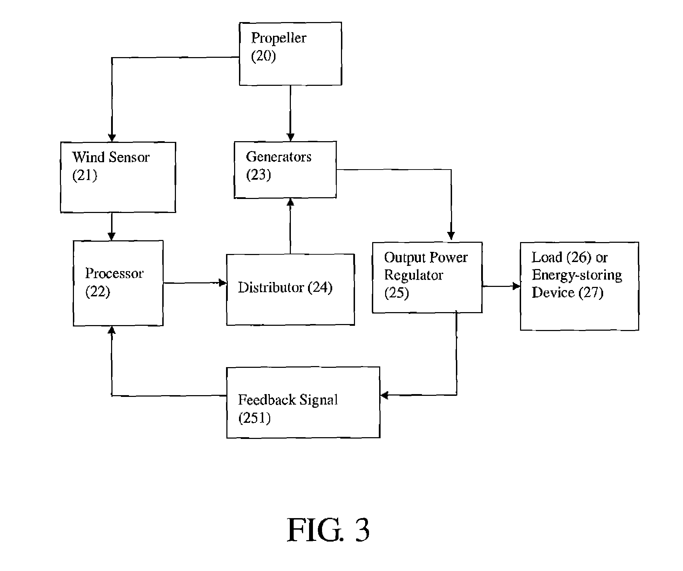

Referring to FIGs. 1-3, the wind generator includes a propeller 20, at least two generators 23 and a control module 2. The control module 2 further includes a speed sensor 21, a processor 22, a distributor 24 and an output power regulator 25. The generators 23 are driven by the propeller 20 for outputting electric power to a load 26.

The propeller 20 includes a blade set 201 and a transmission 202. The blade set 201 is rotated by winds, and then the transmission 202 is synchronously driven to rotate the generator 23.

The speed sensor 21 connects between the propeller 20 and the processor 22 for detecting wind speed or rotation-speed of the propeller 20. The speed sensor 21 outputs a speed signal to the processor 22.

The processor 22 connects between the speed sensor 21 and the distributor 24 for processing signals received. The processor 22 can be a single chip controller, digital signal processor (DSP) or programmable logic controller (PLC). The processor 22 outputs a control signal to the distributor 24 according to rotation-speed of the propeller 20.

The distributor 24 can be a mechanical or electronic switch connected between the processor 22 and the at least two generators 23. The distributor 24 controls anyone of the generators 23 to join or quit cooperation. In other words, the distributor 24 controls another generator to join cooperation when rotation-speed of the propeller 20 exceeds a rated value for preventing the generators 23 from overspeed.

The at least two generators 23 connects between the propeller 20 and the distributor 24. The generators 23 are controlled by the distributor 24 join or quit cooperation and output power to the load 26.

The output power regulator 25 connects between the generators 23 and the load 26. Preferredly, the output power regulator 25 can additionally provide a feedback signal 251 to the processor as a reference parameter.

The processor 22 outputs a control signal to the distributor 24 when rotation-speed of the propeller 20 exceeds a rated value forcing another generator 23 to join cooperation. This can maintain rotation-speed of the propeller 20 and generators 23 within a safe range. A third generator will further join cooperation if the two generators 23 still rotate too fast. No more generators join cooperation if rotation-speed of the propeller 20 is below the rated value. The generators 23 can not only be prevented from damage but also sufficiently exploit natural source. Additionally, the load 26 also can be an energy-storing device 27 for temporarily storing the power from the generators 23.

Those skilled in the art will appreciate that numerous changes and modifications can be made to the preferred embodiments of the invention, and that such changes and modifications can be made without departing from the spirit of the invention.

## Claims

1. A wind generator comprising:
a propeller (20);
at least two generators (23) driven by the propeller (20) for outputting electric power to a load (26); and
a control module (2) comprising:
a speed sensor (21) connecting the propeller (20) for detecting a rotation-speed of the propeller (20) and outputting a speed signal;
a processor (22) connecting the speed sensor (21) for receiving the speed signal and outputting a control signal based on the speed signal; and
a distributor (24) connecting between the processor (22) and the at least two generators (23) for controlling one of the at least two generators (23) to join or quit cooperation according to the control signal;
wherein when the rotation-speed of the propeller (20) exceeds a rated value and only one of the at least two generators (23) is operating, the processor (22) controls another one of the at least two generators (23) to join cooperation through the distributor (24).

2. The wind generator of claim 1, wherein the processor is one of a single chip controller, digital signal processor or programmable logic controller.

3. The wind generator of claim 1, further comprising an output power regulator (25) connected to the at least two generators (23).

4. The wind generator of claim 3, wherein the output power regulator (25) connects to the processor (22) for providing a feedback signal.

5. The wind generator of claim 1, wherein the load is an energy-storing device (27).

6. The wind generator of claim 3, wherein the output power regulator (25) connects to a energy-storing device (27).

7. The wind generator of claim 1, wherein the distributor (24) is a mechanical switch.

8. The wind generator of claim 1, wherein the distributor (24) is an electronic switch.
